# EUROPEAN PATENT APPLICATION

(11) **EP 4 822 848 A1**
(43) Date of publication of application: **14.10.2026**
(21) Application number: 25895307.4
(22) Date of filing: 13.10.2025
(51) Int. Cl.: H01M 50/24, H01M 50/569, H01M 10/48, H01M 10/04, H01M 50/595, H01M 50/342, H01M 50/383

(54) **BATTERY MODULE AND BATTERY PACK INCLUDING SAME**

(30) Priority: 22.11.2024 KR 20240168368
(71) Applicant: LG Energy Solution, Ltd., Seoul 07335 (KR)
(72) Inventor: JUNG, Kitaek, Daejeon 34122 (KR); KIM, Seho, Daejeon 34122 (KR); LEE, Dongwoo, Daejeon 34122 (KR); BAE, Inhwan, Daejeon 34122 (KR)
(74) Representative: Plasseraud IP
(86) International application number: PCT/KR2025/016069
(87) International publication number: WO 2026/111175

(57) **Abstract**

The present disclosure relates to a battery module and a battery pack including the same, and the battery module according to an embodiment of the present disclosure includes: a module frame accommodating a battery cell stack where a plurality of battery cells are stacked, and having at least one surface open; end plates respectively covering the at least one opened surface of the module frame; an insulating plate disposed between the battery cell stack and the end plate, and having a connecting member electrically connected to the battery cell stack; a sensing assembly coupled to the connecting member and configured to sense voltages and temperatures of the plurality of battery cells; and a fireproof cover for surrounding a coupling portion between the sensing assembly and the connecting member and a portion of the insulating plate.

## Description

### [Technical Field]

### CROSS-REFERENCE TO RELATED APPLICATION

This application claims priority to and the benefit of Korean Patent Application No. 10-2024-0168368 filed with the Korean Intellectual Property Office on November 22, 2024, the entire contents of which are incorporated herein by reference.

The present disclosure relates to a battery module and a battery pack including the same, and more specifically, it relates to a battery module for minimizing a backflow of gas and flame generated by a thermal runaway phenomenon of an adjacent battery module into a battery module, and a battery pack including the same.

### [Background Art]

As technical developments and demands on mobile devices increase, demands on rechargeable batteries as energy sources are steeply increasing.

Particularly, the rechargeable batteries are gaining much attention as energy sources for power-based devices such as electric bicycles, electric vehicles, and hybrid electric vehicles in addition to mobile devices such as mobile phones, digital cameras, laptops, and wearable devices.

One or a couple of battery cells per device are used for small mobile devices, whereas medium and large devices such as automobiles require high power/large capacity. Therefore, a medium or large-sized battery module with battery cells electrically connected to each other is used.

Since it is preferable for medium and large battery modules to be manufactured with as small a size and weight as possible, a prismatic battery and a pouch-type battery, which may have a high integration degree and have a small weight with respect to capacity, are mainly used as a battery cell of the medium and large battery modules. The battery module may include a module frame having an internal space that accommodates a battery cell stack to protect the battery cell stack from external impact, heat, or vibration. The module frame is opened at front and rear sides thereof.

Particularly, the battery pack has a structure in which battery modules are combined, so when some of the battery modules receive an overvoltage or an overcurrent or they are overheated, safety and operation efficiency of the battery pack may be problematic. While the capacity of the battery pack is in the increasing trend to improve mileage and energy inside the pack is accordingly increasing, there is a need to design a structure satisfying reinforcing safety standards and obtaining safety of vehicles and drivers.

When thermal runaway occurs in a battery module disposed in the battery pack, thermal propagation may occur to adjacent battery modules. High-temperature gas and flame may be discharged to the outside of the battery module from the battery module where thermal runaway is generated. In addition to the battery module where thermal runaway is generated, it is necessary to minimize backflow of gas and flame into the battery module in other adjacent battery modules.

However, among the external components of the battery module, there is a problem that components with low heat resistance, such as insulating members for securing electrical insulation, may easily fuse due to gas and flame discharged from the battery module where thermal runaway has occurred, and this increases the possibility of inflow of gas and flame back into the battery module.

Accordingly, there is an emerging need to develop a battery module minimizing the backflow of high gas and flame generated when thermal runaway occurs in some battery modules into the battery module, and a battery pack including the same.

### [Disclosure]

### [Technical Problem]

The present disclosure attempts to provide a battery module for minimizing the backflow of gas and flame generated by the thermal runaway phenomenon of an adjacent battery module into a battery module, and a battery pack including the same.

The problems to be solved by the present disclosure are not limited to the problems described above, and problems not mentioned may be clearly understood by a person of ordinary skill in the technical field to which the present disclosure belongs from this specification and the attached drawings.

### [Technical Solution]

An embodiment of the present disclosure provides a battery module including: a module frame accommodating a battery cell stack where a plurality of battery cells are stacked, and having at least one surface open; an end plates respectively covering the at least one opened surface of the module frame; an insulating plate disposed between the battery cell stack and the end plate, and having a connecting member electrically connected to the battery cell stack; a sensing assembly coupled to the connecting member and configured to sense voltages and temperatures of the plurality of battery cells; and a fireproof cover for surrounding a coupling portion between the sensing assembly and the connecting member and a portion of the insulating plate.

A portion of the insulating plate may not be covered by the end plate, and the fireproof cover may cover the portion of the insulating plate to prevent the same from being exposed to an outside of the battery module.

The connecting member may be arranged on an upper portion of the insulating plate, and the fireproof cover may surround the upper portion of the end plate and the upper portion of the insulating plate.

The fireproof cover may extend to cover respective corners of the upper portion of the module frame.

The sensing assembly may include a low voltage (LV) connector coupled to the connecting member and a LV cable electrically connected to the LV connector, and the fireproof cover may surround a coupling portion of the connecting member and the LV connector.

The fireproof cover may include a penetration hole into which a first end of the LV cable is inserted, and a second end of the LV cable may be exposed outside the fireproof cover through the penetration hole.

The fireproof cover may include a cutout for allowing the LV connector to be inserted into the fireproof cover from the outside of the fireproof cover, and the penetration hole may be formed in a portion of the cutout.

The fireproof cover may include at least one protrusion, the end plate may include at least one penetrating portion, and the protrusion and the penetrating portion may be formed on a position where they face each other, and the protrusion and the penetrating portion may be fittingly coupled.

The fireproof cover may be made of a fire-resistance silicone rubber composition.

Thickness of the fireproof cover may be equal to or greater than 0.1 cm and equal to or less than to 1 cm.

At least one venting hole may be formed in an upper portion of the module frame.

The battery module may further include: a fireproof plate for covering the upper portion of the module frame, wherein the fireproof plate may include a venting cutout arranged on a position where the same faces the at least one venting hole.

The venting cutout may be formed on an upper surface or a lower surface of the fireproof plate, and the venting cutout may be cut by a thickness that is less than the thickness of the fireproof plate with respect to a thickness direction of the fireproof plate.

Another embodiment of the present disclosure provides a battery pack including the above-described battery module.

### [Advantageous Effects]

According to the embodiments, the battery module and the battery pack including the same according to the present disclosure may completely enclose the coupling portion of the sensing assembly and the connecting member and a portion of the insulating plate using the fireproof cover, thereby minimizing the backflow of gas and flame generated by thermal runaway of an adjacent battery module into the battery module.

The effects of the object of the present disclosure are not limited to the above-described effects, and effects not mentioned will be clearly understood by a person of ordinary skill in the art from the present specification and the accompanying drawings.

### [Description of the Drawings]

FIG. 1 shows a perspective view on a battery module according to an embodiment of the present disclosure.
FIG. 2 shows an exploded perspective view on a decomposed rear portion of a battery module of FIG. 1.
FIG. 3 shows a perspective view on a battery module of FIG. 1 from which a fireproof cover is removed.
FIG. 4 shows a portion of an upper surface of a battery module of FIG. 1.
FIG. 5 shows a front view on a rear surface of a battery module of FIG. 1.
FIG. 6 shows a front view on an end plate of a battery module of FIG. 1.
FIG. 7 and FIG. 8 show a fireproof cover of a battery module of FIG. 1.

### [Mode for Invention]

The present disclosure will be described more fully hereinafter with reference to the accompanying drawings, in which embodiments of the disclosure are shown. As those skilled in the art would realize, the described embodiments may be modified in various different ways, all without departing from the spirit or scope of the present disclosure.

The drawings and description are to be regarded as illustrative in nature and not restrictive, and like reference numerals designate like elements throughout the specification.

The size and thickness of each configuration shown in the drawings are arbitrarily shown for better understanding and ease of description, but the present disclosure is not limited thereto. The thickness of layers, films, panels, regions, etc., are enlarged for clarity. The thicknesses of some layers and areas are exaggerated for better understanding and ease of description.

It will be understood that when an element such as a layer, film, region, or substrate is referred to as being "on" another element, it may be directly on the other element or intervening elements may also be present. In contrast, when an element is referred to as being "directly on" another element, there are no intervening elements present. The word "on" or "above" means disposed on or below the object portion, and does not necessarily mean disposed on the upper side of the object portion based on a gravitational direction.

Unless explicitly described to the contrary, the word "comprise", and variations such as "comprises" or "comprising", will be understood to imply the inclusion of stated elements but not the exclusion of any other elements.

The phrase "in a plan view" means viewing an object portion from the top, and the phrase "in a cross-sectional view" means viewing a cross-section of which the object portion is vertically cut from the side.

A battery module according to an embodiment of the present disclosure will now be described. However, the front of the battery module will be used as a reference here, but it is not necessarily limited to this, and the rear may also be described with the same or similar content.

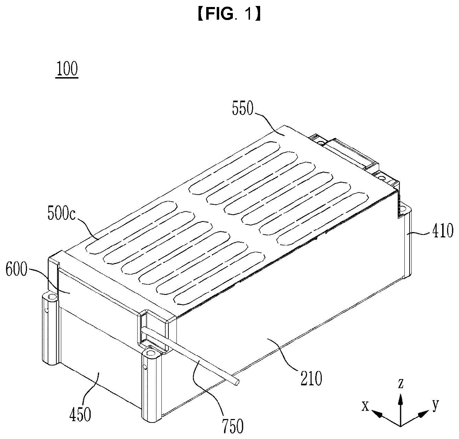

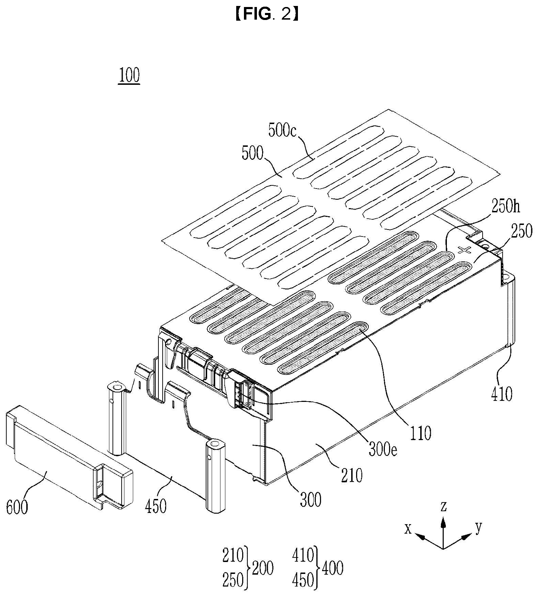

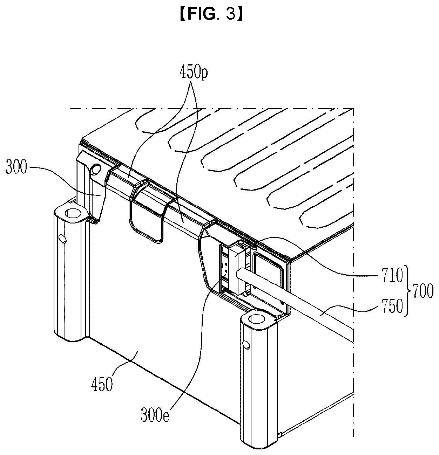

FIG. 1 shows a perspective view on a battery module according to an embodiment of the present disclosure. FIG. 2 shows an exploded perspective view on a decomposed rear portion of a battery module of FIG. 1. FIG. 3 shows a perspective view on a battery module of FIG. 1 from which a fireproof cover is removed.

Referring to FIG. 1 to FIG. 3, the battery module 100 includes: a module frame 200 receiving a battery cell stack 110 in which a plurality of battery cells are stacked, and having at least one surface opened; and an end plate 400 for covering at least one surface opened in the module frame 200.

The battery cell stack 110 may include the plurality of battery cells (not shown) and may be formed by laminating the the plurality of battery cells (not shown) so that they may be electrically connected to each other. Although not shown in the drawing, the battery cell stack 110 may be accommodated into the module frame 200 with a bus bar frame (not shown) disposed on each of the front and rear sides of the battery cell stack 110. The electrode leads formed on the plurality of battery cells included in the battery cell stack 110 may protrude toward the bus bar frame (not shown).

The bus bar frame (not shown) may cover the battery cell stack 110 and may guide a connection between the battery cell stack 110 and an external device. For example, bus bars may be arranged on a bus bar frame (not shown) placed on the rear of the battery cell stack 110, so that the plurality of battery cells may be connected in series or in parallel. The bus bar frame (not shown) may include an electrically insulated material. The bus bar frame (not shown) may prevent a short circuit by limiting contact between the bus bar and the battery cells, except for the portion where the bus bar and the electrode lead included in the battery cell are joined.

The plurality of battery cells (not shown) included in the battery cell stack 110 may be pouch-type battery cells and may be formed into a rectangular sheet-shaped structure. For example, the battery cells (not shown) may be manufactured by bonding both ends of a cell case and one side connecting them while housing the electrode assembly in the cell case. The battery cells (not shown) may have sealing portions formed at both ends and one side, and the sealing portions may be sealed by a method such as heat fusion, and the remaining other side may be formed as a connecting portion. The cell case may be made of a laminate sheet including a resin layer and a metal layer.

The module frame 200 may protect the battery cell stack 110 housed in the module frame 200 and the electrical components connected thereto from external physical impacts. The module frame 200 may be a structure that combines a U-shaped lower frame 210 and an upper plate 250. It may be formed by combining the upper plate 250 on the upper side of the U-shaped lower frame 210, which is a metal plate having a lower surface and both lateral sides combined or integrated, and may be manufactured by press forming. The structure of the module frame 200 is not limited to this and may have the structure of a mono frame. The mono frame may be in the form of a metal plate with an upper surface, a lower surface, and both lateral sides integrated, and may be manufactured by extrusion molding.

Thermal-conductivity resin may be injected between the battery cell stack 110 and the lower surface of the module frame 200, and a thermal-conductivity resin layer (not shown) may be formed between the battery cell stack 110 and the lower surface of the module frame 200 through the injected thermal-conductivity resin.

The end plate 400 may be joined to the module frame 200 while covering at least one open surface of the module frame 200. In detail, the end plate 400 includes a first end plate 410 covering an open front of the module frame 200 and a second end plate 450 covering an open rear of the module frame 200. The first end plate 410 and the second end plate 450 may be joined to the front and back of the module frame 200 respectively, covering the bus bar frame (not shown). That is, a bus bar frame (not shown) may be disposed between the first end plate 410 and the battery cell stack 110, and a bus bar frame (not shown) may be disposed between the second end plate 450 and the battery cell stack 110.

The first end plate 410 and the second end plate 450 may protect the components inside the module frame 200 and various electrical components connected thereto from external impacts, and for this purpose, they must have predetermined strength and may include a metal such as aluminum. The first end plate 410 and the second end plate 450 may be joined to the corresponding corners of the module frame 200 by methods such as welding.

Referring to FIG. 1 and FIG. 2, the battery module 100 according to the present embodiment may further include a fireproof plate 500 covering an upper portion of the module frame 200. The fireproof plate 500 may cover the entire upper plate 250.

As shown in FIG. 2, regarding the battery module 100, at least one venting hole 250h may be formed in the upper portion of the module frame 200. That is, the at least one venting hole 250h may be formed in the upper plate 250. For example, the at least one venting hole 250h may be spaced apart from each other at equal intervals in the upper plate 250.

The fireproof plate 500 may include a venting cutout 500c, each disposed on a position facing the at least one venting hole 250h. In detail, the venting cutout 500c may be formed on the upper surface or the lower surface of the fireproof plate 500. For example, the venting cutout 500c may be cut to be thinner than the fireproof plate 500 with respect to the thickness direction of the fireproof plate 500.

When the battery module 100 operates normally, the venting cutout 500c is closed so the inside of the battery module 100 may be closed and sealed. When the battery module 100 operates abnormally, the pressure inside the battery module 100 may increase, and the venting cutout 500c may easily burst if the pressure inside the battery module 100 is greater than a predetermined pressure. In the case of an abnormal operation of the battery module 100, gas and/or flame generated inside the battery module 100 may be discharged to the outside of the battery module 100 through the venting hole 250h and the ruptured portion of the venting cutout 500c.

Referring to FIG. 1 to FIG. 3, the battery module 100 may include an insulating plate 300 disposed between the battery cell stack 110 and the end plate 400, and having a connecting member 300e formed thereon, which is electrically connected to the battery cell stack 110. The insulating plate 300 includes an electrically insulated material, which allows a space between the bus bar frame (not shown) and the end plate 400 to be electrically insulated. For example, the insulating plate 300 may be made of an injection-molded material such as PC-ABS. However, this is not limited to this, and any material that is sufficiently electrically insulated may be included in the present embodiment.

In detail, as shown in FIG. 2 and FIG. 3, a connecting member 300e electrically connected to the battery cell stack 110 may be exposed on an outer surface of the insulating plate 300. The connecting member 300e may be a flexible printed circuit board (FPCB) or a flexible flat cable (FFC). The connecting member 300e may sense the voltage and temperature of the battery cells included in the battery cell stack 110 and may transmit electrical information to a battery management system (BMS) through a sensing assembly 700 described below.

Referring to FIG. 1 to FIG. 3, the battery module 100 may include a sensing assembly 700 coupled with the connecting member 300e and sensing voltages and temperatures of the plurality of battery cells. The sensing assembly 700 may include an LV connector 710 coupled with the connecting member 300e and an LV cable 750 electrically connected to the LV connector 710. The LV connector 710 may mean the same thing as a module connector.

The sensing assembly 700 may be connected to an external battery management system (BMS) through the LV cable 750, may form an LV connection among the battery modules 100, and may transmit temperature information and voltage levels of the battery modules 100 to the external BMS.

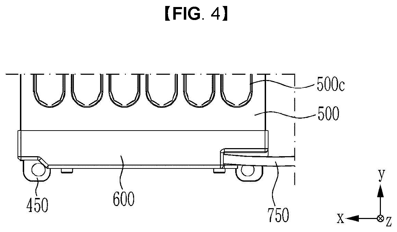

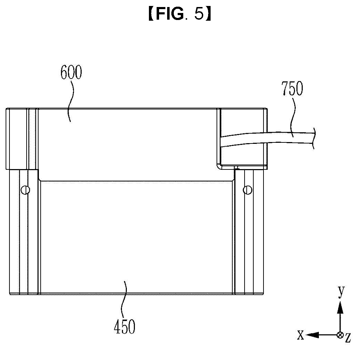

FIG. 4 shows a portion of an upper surface of a battery module of FIG. 1. FIG. 5 shows a front view on a rear surface of a battery module of FIG. 1.

Referring to FIG. 2, FIG. 4, and FIG. 5, the battery module 100 may further include a fireproof cover 600 surrounding a coupling portion of the sensing assembly 700 and the connecting member 300e and a portion of the insulating plate 300.

In detail, the fireproof cover 600 may completely cover a portion of the insulating plate 300 so that the insulating plate 300 is not exposed to the outside of the battery module 100. A portion of the insulating plate 300 may refer to the part not covered by the second end plate 450. For example, as shown in FIG. 3, the second end plate 450 covers the insulating plate 300, and the second end plate 450 may not cover the insulating plate 300 on a portion where the connecting member 300e disposed on the insulating plate 300. The fireproof cover 600 may cover a portion of the insulating plate 300 so that the portion thereof is not exposed to the outside of the battery module 100.

As shown in FIG. 4, the fireproof cover 600 may extend to cover each corner of the upper portion of the module frame 200 so that the upper portion of the insulating plate 300 may not be exposed to the outside of the battery module 100.

The fireproof cover 600 may cover the coupling portion of the connecting member 300e and the LV connector 710. As shown in FIG. 3 to FIG. 5, the connecting member 300e may be arranged on the upper portion of the insulating plate 300, and the fireproof cover 600 may surround the upper portion of the second end plate 450 and the upper portion of the insulating plate 300.

Regarding the battery module 100, the fireproof cover 600 may surround the coupling portion of the sensing assembly 700 and the connecting member 300e and the portion of the insulating plate 300, which has the advantage of preventing the coupling portion of the sensing assembly 700 and the connecting member 300e and the portion of the insulating plate 300 from being fused due to an external high-temperature environment. Particularly, the coupling portion of the sensing assembly 700 and the connecting member 300e and the portion of the insulating plate 300 may be safely protected through the fireproof cover 600 from high-temperature gas and flame generated by thermal runaway of an adjacent battery module, thereby effectively preventing high-temperature gas and flame from flowing back into the battery module 100.

The fireproof cover 600 may be made of a fire-resistance silicone rubber composition. For example, when the fireproof cover 600 is exposed to a high temperature environment such as flame or fire, the fire-resistance silicone rubber composition included in fireproof cover 600 may be cured. As the fireproof cover 600 is cured in the high temperature environment, it may more effectively prevent high temperature gases and flames from flowing back into the battery module 100.

For example, the thickness of the fireproof cover 600 may be equal to or greater than 0.5 mm and equal to or less than 20 mm. For another example, the thickness of fireproof cover 600 may be equal to or greater than 1 mm and equal to or less than 10 mm. For another example, the thickness of fireproof cover 600 may be equal to or greater than 1.5 mm and equal to or less than 5 mm.

Regarding the battery module 100, the fireproof cover 600 is formed with a thickness in the range described above, so that the coupling portion of the sensing assembly 700 and the connecting member 300e and the portion of the insulating plate 300 may be safely protected from high-temperature gas and flame generated by thermal runaway of the adjacent battery module through the fireproof cover 600, and the high-temperature gas and flame may be effectively prevented from flowing back into the battery module 100.

In contrast, when the thickness of the fireproof cover is less than 0.5 mm, there is a high possibility that the fireproof cover 600 may be damaged or deformed in a high-temperature environment such as thermal runaway of the battery module 100, and it may be difficult to prevent high-temperature gas and flame from flowing back into the battery module 100. When the thickness of the fireproof cover is greater than 20 mm, the size of the battery module 100 may become unnecessarily large, which may cause problems such as deterioration of space efficiency and reduction of battery capacity.

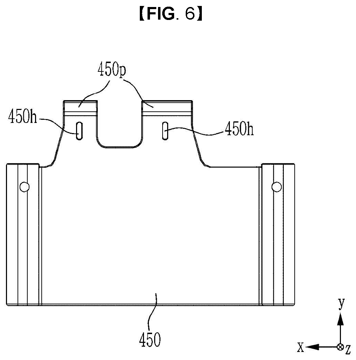

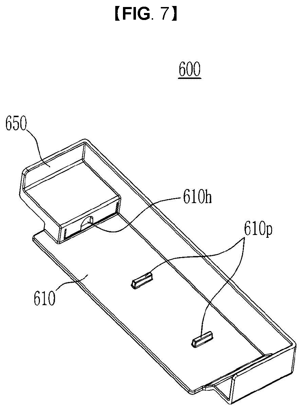

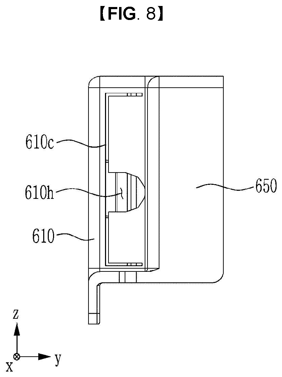

FIG. 6 shows a front view on an end plate of a battery module of FIG. 1. FIG. 7 and FIG. 8 show a fireproof cover of a battery module of FIG. 1.

Referring to FIG. 3 and FIG. 6, the second end plate 450 includes a pair of upper protrusions 450p which may be coupled to the upper portion of the insulating plate 300. For example, the ends of a pair of upper protrusions 450p may be fittingly coupled to the upper portion of the insulating plate 300.

The second end plate 450 may include at least one penetrating portion 450h. For example, as shown in FIG. 6, regarding the second end plate 450, the at least one penetrating portion 450h may be formed in each of the one pair of upper protrusions 450p. The number of the at least one penetrating portion 450h is not limited thereto, and an appropriate number thereof may be arranged as needed.

Referring to FIG. 1, FIG. 7, and FIG. 8, the fireproof cover 600 may include a cover main body 610 and a cover lateral portion 650. The cover main body 610 may be in contact with the second end plate 450 and the insulating plate 300. The cover lateral portion 650 may extend along a portion of the external **circumferential** surface of the cover main body 610 and may come into contact with corners of the second end plate 450 and the insulating plate 300 and an upper surface and both sides of the module frame 200.

In the fireproof cover 600, the cover main body 610 may include a penetration hole 610h into which a first end of the LV cable 750 is inserted. A second end of the LV cable 750 may be exposed to the outside of the fireproof cover 600 through penetration hole 610h. That is, the second end of the LV cable 750 may be exposed to the outside of the fireproof cover 600, and the LV connector 710 electrically connected to the first end of the LV cable 750 may be placed inside the fireproof cover 600.

Regarding the fireproof cover 600, the cover main body 610 may include a cutout 610c through which the LV connector 710 may be inserted into the inside of the fireproof cover 600 from the outside of the fireproof cover 600. The cutout 610c may be cut to a size that allows LV connector 710 to be inserted. For example, the cutout 610c is a rectangular shape with one side not cut, and may be cut in a " 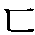 " shape as in FIG. 8. As shown in FIG. 6 and FIG. 7, regarding the cover main body 610, a penetration hole 610h may be formed in a portion of the cutout 610c.

That is, the fireproof cover 600 may be primarily secured to the sensing assembly 700 before being coupled to the battery module 100. In detail, regarding the fireproof cover 600, the LV connector 710 may be inserted between an opened gap of the cutout 610c, and the LV cable 750 may be primarily secured while exposed to the outside of the fireproof cover 600 through the penetration hole 610h. Regarding the sensing assembly 700, the LV connector 710 may be coupled to the connecting member 300e while the fireproof cover 600 hangs onto the LV cable 750.

Referring to FIG. 6 to FIG. 8, the fireproof cover 600 includes at least one protrusion 610p, and the protrusion 610p of the fireproof cover 600 and the penetrating portion 450h of the second end plate 450 may be formed on positions where they face each other. The protrusion 610p of the fireproof cover 600 and the penetrating portion 450h of the second end plate 450 may be secondarily fixed by mutual insertion and combination.

That is, when the LV connector 710 is coupled to the connecting member 300e while the fireproof cover 600 hangs onto the LV cable 750, the protrusion 610p of the fireproof cover 600 may be fittingly coupled to the penetrating portion 450h of the second end plate 450 so that the fireproof cover 600 may be stably fixed on the second end plate 450.

Regarding the battery module 100, the fireproof cover 600 is primarily fixed to the sensing assembly 700, and may be secondarily fixed on the second end plate 450, which facilitates the connection between the sensing assembly 700 and the connecting member 300e, thereby improving the ease of assembly and structural stability.

The battery pack according to an embodiment of the present disclosure includes the above-described battery module. At least one or more battery modules according to the present embodiment may be packaged in a pack case to form a battery pack.

The above-described battery module and the battery pack including the same may be applied to various types of devices. The devices include transport means such as electric bicycles, electric vehicles, and hybrid vehicles, but the present disclosure is not limited thereto, and it may be applied to various devices that use the battery module and the battery pack including the same, which also belongs to the scope of the present disclosure.

In the above, a preferred embodiment of the present disclosure has been shown and described, but the present disclosure is not limited to the specific embodiment described above, and the present disclosure is not only capable of implementing numerous variations by a person of ordinary skill in the technical field to which the disclosure pertains without departing from the gist of the present disclosure claimed in the claimed range, and these variations should not be understood individually from an idea or perspective the present disclosure.

## Claims

1. A battery module comprising:
a module frame accommodating a battery cell stack where a plurality of battery cells are stacked, and having at least one surface open;
end plates respectively covering at least one opened surface of the module frame;
an insulating plate disposed between the battery cell stack and the end plate, and having a connecting member electrically connected to the battery cell stack;
a sensing assembly coupled to the connecting member and configured to sense voltages and temperatures of the plurality of battery cells; and
a fireproof cover surrounding a coupling portion between the sensing assembly and the connecting member and a portion of the insulating plate.

2. The battery module of claim 1, wherein
a portion of the insulating plate is not covered by the end plate, and
the fireproof cover covers the portion of the insulating plate to prevent the same from being exposed to an outside of the battery module.

3. The battery module of claim 1, wherein
the connecting member is arranged on an upper portion of the insulating plate, and
the fireproof cover surrounds the upper portion of the end plate and the upper portion of the insulating plate.

4. The battery module of claim 3, wherein
the fireproof cover extends to cover respective corners of the upper portion of the module frame.

5. The battery module of claim 1, wherein
the sensing assembly includes a low voltage (LV) connector coupled to the connecting member and a LV cable electrically connected to the LV connector, and
the fireproof cover surrounds a coupling portion of the connecting member and the LV connector.

6. The battery module of claim 5, wherein
the fireproof cover includes a penetration hole into which a first end of the LV cable is inserted, and
a second end of the LV cable is exposed outside the fireproof cover through the penetration hole.

7. The battery module of claim 6, wherein
the fireproof cover includes a cutout for allowing the LV connector to be inserted into the fireproof cover from the outside of the fireproof cover, and
the penetration hole is formed in a portion of the cutout.

8. The battery module of claim 1, wherein
the fireproof cover includes at least one protrusion,
the end plate includes at least one penetrating portion, and
the protrusion and the penetrating portion are formed on a position where they face each other, and the protrusion and the penetrating portion are fittingly coupled.

9. The battery module of claim 1, wherein
the fireproof cover is made of a fire-resistance silicone rubber composition.

10. The battery module of claim 1, wherein
thickness of the fireproof cover is equal to or greater than 0.1 cm and equal to or less than to 1 cm.

11. The battery module of claim 1, wherein
at least one venting hole is formed in an upper portion of the module frame.

12. The battery module of claim 11, further comprising:
a fireproof plate for covering the upper portion of the module frame,
wherein the fireproof plate includes a venting cutout arranged on a position where the same faces the at least one venting hole.

13. The battery module of claim 12, wherein
the venting cutout is formed on an upper surface or a lower surface of the fireproof plate, and
the venting cutout is cut by a thickness that is less than the thickness of the fireproof plate with respect to a thickness direction of the fireproof plate.

14. A battery pack including the battery module according to Claim 1.
